# EUROPÄISCHE PATENTSCHRIFT

(11) **EP 0 892 912 B1**
(45) Veröffentlichungstag und Bekanntmachung des Hinweises auf die Patenterteilung: **28.11.2007**
(21) Anmeldenummer: 97945756.1
(22) Anmeldetag: 16.10.1997
(51) Int. Cl.: G01F 1/64, G01P 5/20, G01F 1/708

(54) **VERFAHREN UND EINRICHTUNG ZUR MESSUNG EINER TEILCHENZUSTANDSGRÖSSE**
METHOD AND DEVICE FOR MEASURING THE STATE VARIABLE OF PARTICLES
PROCEDE ET DISPOSITIF POUR LA MESURE D'UNE VARIABLE D'ETAT DE PARTICULES

(30) Priorität: 12.12.1996 DE 19651611
(43) Veröffentlichungstag der Anmeldung: 27.01.1999
(73) Patentinhaber: ROBERT BOSCH GMBH, 70442 Stuttgart (DE)
(72) Erfinder: BAUER, Walter, D-71735 Eberdingen (DE); BRAUN, Hans, D-70178 Stuttgart (DE)
(86) Internationale Anmeldenummer: PCT/DE1997/002380
(87) Internationale Veröffentlichungsnummer: WO 1998/026255

(56) Entgegenhaltungen:
- DE-A- 3 627 162
- FR-A- 2 516 234
- GB-A- 2 266 772
- US-A- 3 635 082
- US-A- 4 363 244
- US-A- 4 712 736
- US-A- 4 752 727
- US-A- 5 022 274

## Beschreibung

Die Erfindung betrifft ein Verfahren und eine Einrichtung zur Messung einer Teilchenzustandsgröße eines elektrisch geladene Teilchen enthaltenden, in einem Auspuffrohs strömendem Abgases einer Brennkraftmaschine. Die Teilchenzustandsgröße ist dabei entweder die Teilchenkoncentration oder die Teilchengeschwindigkeit oder der Teilchendurchsatz.

### Stand der Technik

Es ist bekannt, bei der Messung eines Volumenstromes eines bewegten Mediums wenigstens zwei Sensoren einzusetzen, die bezogen auf die Strömungsrichtung des strömenden Mediums hintereinander liegen. Die Ausgangssignale dieser Sensoren werden mit Hilfe einer Auswerteeinrichtung in elektrische Signale gewandelt, die dann miteinander verglichen werden.

Aus der DE-PS 36 27 162 ist eine solche Anordnung zur berührungslosen Messung des Volumenstroms eines bewegten Mediums bekannt, bei der zwei Wandler eingesetzt werden, deren Ausgangssignale mit Hilfe einer Kreuzkorrelationsfunktion ausgewertet werden. Der Wert für den Volumenstrom des bewegten Mediums wird aus der Steigung der zeitlichen Kreuzkorrelationsfunktion der beiden Signale bei der zeitlichen Verschiebung Null oder aus dem ersten Moment des Kreuzleistungsdichtespektrums der beiden Signale bestimmt. In einer Erweiterung dieser bekannten Anordnung werden mehrere Wandler entlang der Bewegungsrichtung des bewegten Mediums angeordnet, wobei sich die Erfassungsbereiche der Wandlerelemente überlappen. Als Wandler wird beispielsweise eine Sender-Empfänger-Einheit eingesetzt. Der Sender erzeugt ein von den Inhomogenitäten des Mediums zu beeinflussendes Feld. Ein zugehöriger Empfänger spricht auf das von den Inhomogenitäten beeinflußte Feld an und gibt ein die zeitlichen Änderungen des Feldes wiedergebendes elektrisches Signal ab. Als Wandler bzw. Empfänger können optische, akustische oder kapazitive Systeme eingesetzt werden. Bei strömenden Medien, deren Inhomogenitäten aktiv sind und selbst ein nutzbares Feld erzeugen, beispielsweise bei Medien, die radioaktive Partikel aufweisen, kann ohne Sender gearbeitet werden, es wird dann im Empfänger die Strahlung der radioaktiven Partikel empfangen und in ein elektrisches Signal gewandelt.

Aus der US-PS 3 744 461 ist eine Anordnung zur Messung der Rauchdichte im Abgastrakt einer Brennkraftmaschine bekannt, bei der die Teilchendichte der elektrisch geladenen Teilchen mit Hilfe einer Elektrodenanordnung ermittelt wird. Die Elektroden liegen einander gegenüber und werden durch die geladenen Rauchteilchen aufgeladen. Durch Messung des Potentials der Elektroden läßt sich die Dichte der strömenden Rauchpartikel ermitteln.

Aus der US-A-5 022 274 ist ein Verfahren zur Messung einer Teilchengeschwindigkeit in einem Metallrohr bekannt, wobei mindestens zwei Ringelektroden parallel zur Teilchenflugrichtung und in Strömungsrichtung hintereinander in die Innenwand des Rohres eingebracht und dem Teilchenstrom ausgesetzt sind. Die von den triboelektrisch aufgeladenen Teilchen an die Elektroden abgegebenen Ladungen werden gemessen, wobei die Auswertung der zeitlichen Aufeinanderfolge korrespondierender Signale der Elektroden einen Rückschluss auf die Teilchengeschwindigkeit erlaubt.

### Vorteile der Erfindung

Die erfindungsgemäßen verfahren und Einrichtungen zur Messung einer Teilchenzustandsgröße mit den Merkmalen der Anspruche 1,2,8 bzw. 9 haben gegenüber den bekannten verfahren bzw. Systemen den Vorteil, daß die Meßanordnung einfach und dennoch empfindlich ist. Da die Elektroden werden der Meßanordnung auf Massepotential gehalten wird ergeben sich Vorteile bei der Signalauswertung. Ein durch Rußbelegung hervorgerufener Leckwiderstand der Elektroden gegen Masse beeinflußt die Funktionsweise infolge der auf Masse liegenden Elektroden nicht oder nur sehr wenig.

Bei der berührungslosen Messung der Teilchenkonzentration eines elektrisch geladene Teilchen enthaltenden strömenden Mediums wird wenigstens eine flächenhafte Elektrode so im Teilchenstrom angeordnet, daß die geladenen Teilchen nicht auf die Elektrode auftreffen und beim Vorbeifliegen elektrische Ladungen influenzieren. Diese Influenzladungen bewirken einen elektrischen Wechselanteil im Ausgangssignal des Sensors, der als Maß für die Teilchenkonzentration dient.

Die erfindungsgemäße Einrichtung mit den Merkmalen des Anspruchs 9 hat den Vorteil, daß sich die Teilchengeschwindigkeit einfach ermitteln läßt und das erfindungsgemäße, verfahren mit den Merkmalen des Anspruchs 3 hat darüberhinaus noch den Vorteil, daß sich auch der Teilchendurchsatz ermitteln läßt.

Erzielt werden diese Vorteile, indem bei einer erfindungsgemäßen Einrichtung mit den zur berührungslosen Messung einer Teilchenzustandsgröße eines elektrisch geladene Teilchen enthaltenden strömenden Mediums zwei Elektroden in Strömungsrichtung gesehen hintereinander angeordnet werden und die elektrischen Ausgangssignale, die durch Influenz auf den Elektroden erzeugt werden, zueinander in Bezug gesetzt werden. Da sowohl die statistische Ähnlichkeit der beiden Ausgangssignale als auch ihre zeitliche Verschiebung, die von der Transportzeit der Partikel von der ersten zur zweiten Elektrode abhängen, ausgewertet werden, läßt sich eine besonders vorteilhafte Signalauswertung erzielen. Weitere Vorteile der Erfindung werden mit Hilfe der in den weiteren Unteransprüchen angegebenen Maßnahmen erzielt.

### Zeichnung

Ein Ausführungsbeispiel der Erfindung ist in der Zeichnung dargestellt und wird in der nachfolgenden Beschreibung näher erläutert.

### Beschreibung

In der Figur ist ein Ausführungsbeispiel der Erfindung mit zwei Elektroden dargestellt, mit dem die Partikelemission im Abgas, beispielsweise eines Dieselmotors, ermittelt werden kann. Dazu werden in einem Auspuffrohr 10, beispielsweise dem Auspuff des Dieselmotors wenigstens zwei Elektroden 11, 12, die beispielsweise flächenhaft ausgestaltet sind, angebracht. Diese beiden Elektroden 11, 12 sind in Strömungsrichtung, die mit V bezeichnet ist, hintereinander angeordnet, wobei die Flächen etwa parallel zur Störungs- bzw. Flugrichtung der elektrisch geladenen Teilchen liegen. Die Elektroden 11, 12 dürfen mit dem Auspuff 10 leitend in Verbindung stehen, sie befinden sich aufgrund der verwendeten Verstärker ebenso wie der Auspuff auf Massepotential.

Die im Abgas befindlichen Partikel 13 sind elektrostatisch aufgeladen und influenzieren daher bei ihrem Vorbeiflug an den Elektroden 11, 12 eine Ladungsverschiebung. Diese Ladungsverschiebung wird von den den Elektroden zugeordneten Ladungsverstärkern 14, 15 in Spannungssignale S1, S2 transformiert. Die Ladungsverstärker 14, 15 können als Operationsverstärker OP1 und OP2 mit jeweils im Rückkopplungszweig liegenden Kondensatoren C1, C2 aufgebaut sein. Die Verstärker halten dabei die Elektroden auf Massepotential.

Die von den Ladungsverstärkern OP1, OP2 abgegebenen Spannungssignale sind von der Ladungsdichte der elektrisch geladenen Partikel 13 abhängig. Jede gewonnene Rauschspannung erhöht sich somit mit der Partikelkonzentration und -ladung. Die Signalverläufe, die sich am Ausgang der Ladungsverstärker 14, 15 einstellen, sind als Signale S1 (t) und S2 (t) über der Zeit t aufgetragen. Es ist zu erkennen, daß diese Signale eine gewisse Korrelation zueinander aufweisen. Infolge der Bewegungsrichtung von Elektrode 11 nach Elektrode 12 sind die Signale S1 (t) und S2 (t) gegeneinander zeitlich um die Transportzeit τ verschoben. Die Transportzeit τ ist also die Zeit, die die Teilchen benötigen, um von der Elektrode 11 zur Elektrode 12 zu gelangen.

Die Signale S1 (t) und S2 (t) werden in einer z. B. mikroprozessorgesteuerten Auswerteeinrichtung 16 sowohl einer statistischen Auswertung unterzogen, als auch hinsichtlich ihrer zeitlichen Verschiebung gegeneinander ausgewertet, wobei je nach Auswerteart die Konzentration der elektrisch geladenen Teilchen, die Teilchengeschwindigkeit oder aus der Multiplikation von Teilchenkonzentration und Teilchengeschwindigkeit auch der Teilchendurchsatz ermittelt werden kann. Die statistische Auswertung des einzelnen Signals führt dabei zu einem Maß für die Beladung des Abgasstroms mit elektrisch geladenen Teilchen, z. B. mit Rußteilchen. Durch die Auswertung der statistischen Ähnlichkeiten (Korrelationen) zweier Signale, die von unterschiedlichen Elektroden stammen und die zeitlich um die Transportzeit τ der Partikel gegeneinander verschoben sind, läßt sich auch ein Maß für die Strömungsgeschwindigkeit des Abgasstromes gewinnen. Es wird dazu die Transportzeit τ berechnet, dies kann beispielsweise durch Auswertung der Kreuzkorrelationsfunktion der beiden Signale erfolgen. Insgesamt wird also sowohl die Signalhöhe der beiden Signale als auch ihre zeitliche Verschiebung gegeneinander ausgewertet, um den Teilchendurchsatz zu bestimmen.

Werden weitere Elektroden periodisch in Strömungsrichtung hintereinander angeordnet und die zugehörigen Signale in geeigneter weise durch Addition und Subtraktion zu einem Gesamtsignal verknüpft, so erzeugen elektrisch geladene Teilchen, die an der Elektrodenstruktur vorbeifliegen, periodische Anteile im Gesamtsignal. Die Frequenz der periodischen Anteile ist dabei proportional zur Partikelgeschwindigkeit. Die Bestimmung der Frequenz bzw. der mittleren Frequenz kann als Maß für die Strömungsgeschwindigkeit verwendet werden. Die Bestimmung dieser Frequenz kann beispielsweise durch Spektralanalyse der Signale oder durch geeignete Wahl des Verknüpfungsschemas der Elektrodensignale zum Gesamtsignal mit geringem Aufwand im Zeitbereich erfolgen.

Wird die beschriebene Einrichtung zur berührungslosen Messung der Teilchenkonzentration im Auspuff eines Dieselmotors eingesetzt, läßt sich eine Größe gewinnen, die ein Maß für den emittierten Ruß des Motors darstellt. Diese Größe kann als Regelgröße oder als zusätzliche Meßgröße im Betrieb des Dieselmotors zur Regelung des Einspritzsystems verwendet werden. Die Erfindung ist jedoch nicht auf die Rußmessung bei Dieselmotoren beschränkt, sondern kann allgemein zur Erfassung von bewegten elektrisch geladenen Teilchen verwendet werden.

Wird in einer vereinfachten Ausführungsform nur eine Elektrode eingesetzt, kann aus der Analyse des Signalsverlaufs insbesonders des Wechselanteils des Signals, z. B. durch Bildung der Varianz die Konzentration der geladenen Teilchen ermittelt werden. Zur Bildung der Varianz wird das Signal quadriert und tiefpaßgefiltert. Diese Signalverarbeitung kann in der Auswerteeinrichtung 16, die dann über geeignete Mittel verfügen muß, erfolgen.

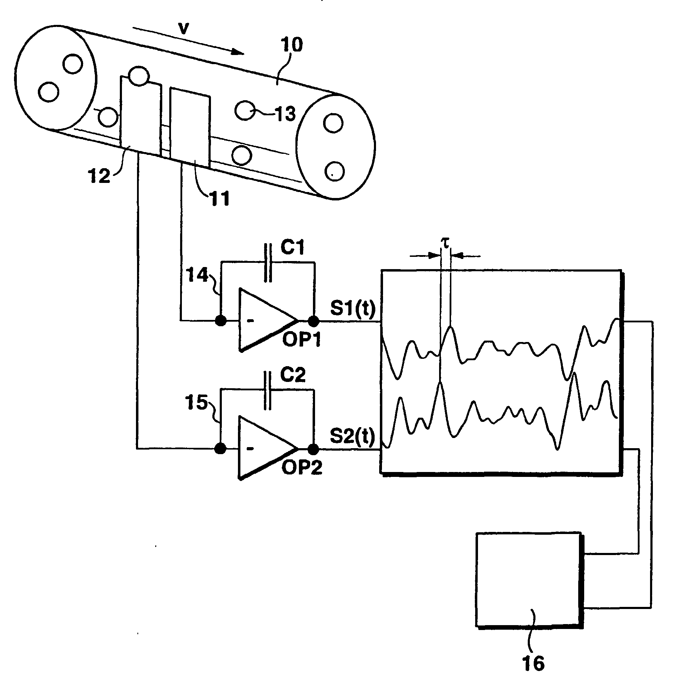

Die Bildung der Varianz kann selbstverständlich auch bei einer Anwendung nach Figur 1 erfolgen, es kann dabei wenigstens eines der beiden Signale S1 (t) oder S2 (t) verarbeitet werden.

Wird lediglich die Flugzeit bzw. die Transportzeit τ ausgewertet, kann immerhin die Geschwindigkeit der Teilchen ermittelt werden. Die Berechnung der Transportzeit kann beispielsweise über die Bildung einer Krenzkorrelationsfunktion erfolgen.

## Patentansprüche

1. Verfahren zur berührungslosen Messung einer Teilchenzustandsgröße eines elektrisch geladene Teilchen (13) enthaltenden, in einem Auspuffrohr (10) strömenden Abgases einer Brennkraftmaschine, mit wenigstens einem Sensorelement, das ein elektrisches Ausgangssignal liefert, das von der Zusammensetzung des strömenden Mediums abhängt, wobei das Sensorelement als flächenhafte Elektrode (11, 12) ausgeführt und dem im Auspuffrohr (10) strömenden Abgas ausgesetzt wird, wobei die flächenhafte Elektrode (11, 12) im wesentlichen parallel zur Teilchenflugrichtung angeordnet und mittels einem der Elektrode (11,12) zugeordneten, der Ladungsverstärkung dienenden Operationsverstärker (OP1, OP2) auf dem Potential des Auspuffrohrs (10) gehalten wird, sodass ein durch Rußbelegung hervorgerufener Leckwiderstand der Elektrode (11,12) gegen Masse deren Funktionsweise nur sehr wenig beeinflusst, und wobei mittels einer Auswerteeinheit (16) ein Signalwechselanteil im elektrischen Ausgangssignal, welches verursacht wird durch wechselnde Ladungsverschiebungen, die durch sich an der Elektrode (11, 12) vorbeibewegende elektrisch geladene Teilchen (13) influenziert werden, erfasst und als Maß für die Teilchenkonzentration im Abgas herangezogen wird.

2. Verfahren zur berührungslosen Messung einer Teilchenzustandsgröße eines elektrisch geladene Teilchen (13) enthaltenden, in einem Auspuffrohr (10) strömenden Abgases einer Brennkraftmaschine, mit wenigstens zwei Sensorelementen, die elektrische Ausgangssignale liefern, die von der Zusammensetzung des Abgases abhängen, wobei die wenigstens zwei Sensorelemente als flächenhafte Elektroden (11, 12) ausgestaltet und dem im Auspuffrohr (10) strömenden Abgas ausgesetzt werden, wobei die flächenhaften Elektroden (11, 12) im wesentlichen parallel zur Teilchenflugrichtung und in Strömungsrichtung gesehen hintereinander angeordnet werden und mittels jeweils einer der Elektroden (11,12) zugeordneten der Ladungsverstärkung dienenden Operationsverstärker auf dem Potential des Auspuffrohrs (10) gehalten werden, sodass ein durch Rußbelegung hervorgerufener Leckwiderstand der Elektroden (11,12) gegen Masse deren Funktionsweise nur sehr wenig beeinflusst, und wobei mittels einer Auswerteeinheit (16) ein Signalwechselanteil in den elektrischen Ausgangssignalen, welche verursacht werden durch wechselnde Ladungsverschiebungen, die durch sich an den Elektroden (11, 12) vorbeibewegende elektrisch geladene Teilchen (13) influenziert werden, sowie eine Zeitverzögerung τ der Ausgangssignale gegeneinander als Maß für die Teilchengeschwindigkeit im Abgas erfasst wird.

3. Verfahren nach Anspruch 2, **dadurch gekennzeichnet, dass** zusätzlich die Signalwechselanteile in den elektrischen Ausgangssignalen als Maß für die Teilchenkonzentration ausgewertet werden, und dass ein Maß für den Teilchendurchsatz aus dem Produkt aus Teilchenkonzentration und Teilchengeschwindigkeit ermittelt wird.

4. Verfahren nach Anspruch 1 oder 3, **dadurch gekennzeichnet, dass** zur Bestimmung der Teilchenkonzentration die Auswertung der Signalwechselanteile durch Ermittlung ihrer Varianz erfolgt.

5. Verfahren nach Anspruch 4, **dadurch gekennzeichnet, daß** die Varianz durch Quadrierung der Signale und anschließende Tiefpaßfilterung ermittelt wird.

6. Verfahren nach einem der Ansprüche 2, 3, oder einem der Ansprüche 4 oder 5, sofern von Anspruch 3 abhängig, **dadurch gekennzeichnet, dass** die mittlere Frequenz eines periodischen Anteils ermittelt wird, und diese mittlere Frequenz als Maß für die Strömungsgeschwindigkeit der elektrisch geladenen Teilchen ausgewertet wird, wobei die Auswertung mittels Spektralanalyse der Signale erfolgt.

7. Verfahren nach einem der Ansprüche 2, 4 oder 5, sofern von Anspruch 2 abhängig, **dadurch gekennzeichnet, daß** die Berechnung der Zeitverzögerung τ durch Auswertung eines Kreuzkorrelationsfunktion erfolgt.

8. Einrichtung zur Durchführung eines Verfahrens nach Ansprunch 1, mit wenigstens einem Auspuffrohr (10) und in einem Auspuffrohr (10) angeordneten Sensorelement, das ein elektrisches Ausgangssignal liefert, das von der Zusammensetzung eines in dem Auspuffrohr (10) strömenden Abgases abhängt, wobei das Sensorelement eine flächenhafte Elektrode (11, 12) ist, die dem im Auspuffrohr (10) strömenden Abgas ausgesetzt ist, die im wesentlichen parallel zur Teilchenflugrichtung liegt und die mittels einem der Elektrode (11,12) zugeordneten, der ladungsverstärkung dienenden Operationsverstärker (OP1,OP2) auf dem Potential des Auspuffrohrs (10) gehalten wird, sodass ein durch Rußbelegung hervorgerufener Leckwiderstand der Elektrode (11,12) gegen Masse deren Funktionsweise nur sehr venig beeinflusst, und wobei die Einrichtung eine Auswerteeinheit zur Erfassung eines Signalwechselanteils in einem elektrischen Ausgangssignal, welches verursacht wird durch wechselnde Ladungsverschiebungen, die durch sich an der Elektrode (11, 12) vorbeibewegende elektrisch geladene Teilchen (13) influenziert werden, als Maß für die Teilchenkonzentration im Abgas umfasst.

9. Einrichtung zur Durchführung eines Verfahrens nach Anspruch 2 mit einem Auspuffrohr (10) und wenigstens zwei in Auspuffrohr (10) angeordneten Sensorelementen, die elektrische Ausgangssignale liefern, die von der Zusammensetzung eines in dem Auspuffrohr (10) strömenden Abgases abhängen, wobei die wenigstens zwei Sensorelemente als flächenhafte Elektroden (11, 12) ausgestaltet sind, die dem im Auspuffrohr (10) strömenden Abgas ausgesetzt sind, die im wesentlichen parallel zur Teilchenflugrichtun,liegen, die in Strömungsrichtung gesehen hintereinander angeordnet sind und die mittels jeweils einer der Elektroden (11,12) zugeordneten der Ladungsverstärkung dienenden Operationsverstärker (OP1, OP2) auf dem Potential des Auspuffrohrs (10) gehalten sind, sodass ein durch Rußbelegung hervorgerufener Leckwiderstand der Elektroden (11,12) gegen Masse deren Funktionsweise nur sehr wenig beeinflusst und wobei die Einrichtung eine Auswerteeinheit (16) zur Erfassung eines Signalwechselanteils in den elektrischen Ausgangssignalen, welche verursacht werden durch wechselnde Ladungsverschiebungen, die durch sich an den Elektroden (11, 12) vorbeibewegende elektrisch geladene Teilchen (13) influenziert werden, sowie zur Erfassung der Zeitverzögerung τ der Ausgangssignale gegeneinander als Maß für die Teilchengeschwindigkeit im Abgas umfasst.

10. Einrichtung nach Anspruch 8 oder 9, **dadurch gekennzeichnet, daß** der jeder Elektrode (11, 12) zugeordnete Operationsverstärker mit einem Rückkoppelkondensator versehen ist.

11. Einrichtung nach einem der Ansprüche 8 bis 10, **dadurch gekennzeichnet, dass** mindestens drei Elektroden periodisch in Strömungsrichtung hintereinander angeordnet sind.

12. Verwendung eines Verfahrens nach einem der Ansprüche 1 bis 7 oder einer Einrichtung nach einem der Ansprüche 8 bis 11 zur Bestimmung der Konzentration von im Abgas eines Dieselmotors enthaltenen Rußteilchen.

## Claims

1. Method for contactlessly measuring a particle state variable of an exhaust gas from an internal combustion engine, which exhaust gas contains electrically charged particles (13) and flows in an exhaust pipe (10), using at least one sensor element which provides an electrical output signal that depends on the composition of the flowing medium, the sensor element being in the form of a two-dimensional electrode (11, 12) and being exposed to the exhaust gas flowing in the exhaust pipe (10), the two-dimensional electrode (11, 12) being arranged such that it is essentially parallel to the particle flight direction and being kept at the potential of the exhaust pipe (10) using an operational amplifier (OP1, OP2) which is assigned to the electrode (11, 12) and is used for charge amplification, with the result that a leakage resistance of the electrode (11, 12) to earth, which is caused by soot loading, influences the method of operation of said electrode to only a very slight extent, and an alternating signal component in the electrical output signal, which is caused by alternating charge displacements which are influenced by electrically charged particles (13) which move past the electrode (11, 12), being detected using an evaluation unit (16) and being used as a measure of the particle concentration in the exhaust gas.

2. Method for contactlessly measuring a particle state variable of an exhaust gas from an internal combustion engine, which exhaust gas contains electrically charged particles (13) and flows in an exhaust pipe (10), using at least two sensor elements which provide electrical output signals that depend on the composition of the exhaust gas, the at least two sensor elements being in the form of two-dimensional electrodes (11, 12) and being exposed to the exhaust gas flowing in the exhaust pipe (10), the two-dimensional electrodes (11, 12) being arranged such that they are essentially parallel to the particle flight direction and are behind one another in the direction of flow and being kept at the potential of the exhaust pipe (10) using a respective operational amplifier which is assigned to the electrodes (11, 12) and is used for charge amplification, with the result that a leakage resistance of the electrodes (11, 12) to earth, which is caused by soot loading, influences the method of operation of said electrodes to only a very slight extent, and an alternating signal component in the electrical output signals, which are caused by alternating charge displacements which are influenced by electrically charged particles (13) which move past the electrodes (11, 12), as well as a time delay τ between the output signals being detected as a measure of the particle velocity in the exhaust gas using an evaluation unit (16).

3. Method according to Claim 2, **characterized in that** the alternating signal components in the electrical output signals are additionally evaluated as a measure of the particle concentration, and **in that** a measure of the particle throughput is determined from the product of the particle concentration and particle velocity.

4. Method according to Claim 1 or 3, **characterized in that**, in order to determine the particle concentration, the alternating signal components are evaluated by determining their variance.

5. Method according to Claim 4, **characterized in that** the variance is determined by squaring the signals and then subjecting them to low-pass filtering.

6. Method according to either of Claims 2 and 3 or either of Claims 4 and 5, if dependent on Claim 3, **characterized in that** the average frequency of a periodic component is determined and this average frequency is evaluated as a measure of the flow velocity of the electrically charged particles, the evaluation being carried out using spectral analysis of the signals.

7. Method according to one of Claims 2, 4 or 5, if dependent on Claim 2, **characterized in that** the time delay τ is calculated by evaluating a cross-correlation function.

8. Device for carrying out a method according to Claim 1, said device having at least one exhaust pipe (10) and a sensor element which is arranged in the exhaust pipe (10) and provides an electrical output signal that depends on the composition of an exhaust gas flowing in the exhaust pipe (10), the sensor element being a two-dimensional electrode (11, 12) which is exposed to the exhaust gas flowing in the exhaust pipe (10), is essentially parallel to the particle flight direction and is kept at the potential of the exhaust pipe (10) using an operational amplifier (OP1, OP2) which is assigned to the electrode (11, 12) and is used for charge amplification, with the result that a leakage resistance of the electrode (11, 12) to earth, which is caused by soot loading, influences the method of operation of said electrode to only a very slight extent, and the device comprising an evaluation unit for detecting an alternating signal component in an electrical output signal, which is caused by alternating charge displacements which are influenced by electrically charged particles (13) which move past the electrode (11, 12), as a measure of the particle concentration in the exhaust gas.

9. Device for carrying out a method according to Claim 2, said device having an exhaust pipe (10) and at least two sensor elements which are arranged in the exhaust pipe (10) and provide electrical output signals that depend on the composition of an exhaust gas flowing in the exhaust pipe (10), the at least two sensor elements being in the form of two-dimensional electrodes (11, 12) which are exposed to the exhaust gas flowing in the exhaust pipe (10), are essentially parallel to the particle flight direction, are arranged behind one another in the direction of flow and are kept at the potential of the exhaust pipe (10) using a respective operational amplifier (OP1, OP2) which is assigned to the electrodes (11, 12) and is used for charge amplification, with the result that a leakage resistance of the electrodes (11, 12) to earth, which is caused by soot loading, influences the method of operation of said electrodes to only a very slight extent, and the device comprising an evaluation unit (16) for detecting an alternating signal component in the electrical output signals, which are caused by alternating charge displacements which are influenced by electrically charged particles (13) which move past the electrodes (11, 12), and for detecting a time delay τ between the output signals as a measure of the particle velocity in the exhaust gas.

10. Device according to Claim 8 or 9, **characterized in that** the operational amplifier which is assigned to each electrode (11, 12) is provided with a feedback capacitor.

11. Device according to one of Claims 8 to 10, **characterized in that** at least three electrodes are periodically arranged behind one another in the direction of flow.

12. Use of a method according to one of Claims 1 to 7 or a device according to one of Claims 8 to 11 to determine the concentration of soot particles contained in the exhaust gas of a diesel engine.

## Revendications

1. Procédé de mesure sans contact d'une variable d'état de particules d'un gaz d'échappement contenant des particules chargées électriquement (13), traversant une conduite d'échappement (10) d'un moteur à combustion interne, ayant au moins un élément de capteur fournissant un signal de sortie électrique dépendant de la composition du fluide qui passe, l'élément de capteur étant réalisé sous une forme d'électrode (11, 12) à surfaces, exposée aux gaz d'échappement passant dans la conduite de gaz d'échappement (10),
l'électrode (11, 12) à surfaces installée pratiquement parallèlement à la direction de la trajectoire des particules est maintenue au potentiel de la conduite d'échappement (10) par un amplificateur opérationnel (OP1, OP2) servant d'amplificateur de charge, associé à l'électrode (11, 12),
de sorte que la résistance de fuite de l'électrode (11, 12) par rapport à la masse, engendrée par la résistance de fuite créée par le dépôt de suie, n'influence que très peu son fonctionnement et à l'aide d'une unité d'exploitation (16), on saisit une composante de signal alternatif dans le signal électrique de sortie, engendrée par l'alternance des décalages de charge influencée par les particules à charge électrique (13) passant sur l'électrode (11, 12), pour servir de mesure de la concentration des particules dans les gaz d'échappement.

2. Procédé de mesure sans contact d'une variable d'état de particules de gaz d'échappement contenant des particules (13) à charge électrique, passant dans une conduite d'échappement (10) d'un moteur à combustion interne, ayant au moins deux éléments de capteur fournissant des signaux électriques de sortie dépendant de la composition des gaz d'échappement,
au moins les deux éléments de capteur étant réalisés sous la forme d'électrodes à surfaces (11, 12) exposées aux gaz d'échappement traversant la conduite d'échappement (10), les électrodes à surfaces (11, 12) étant installées l'une derrière l'autre essentiellement parallèlement à la direction de trajectoire des particules et la direction d'écoulement et à l'aide chaque fois d'un amplificateur opérationnel servant d'amplificateur de charge, associé à l'une des électrodes (11, 12), pour maintenir le potentiel de la conduite d'échappement (10) de sorte que la résistance de fuite des électrodes (11, 12) par rapport à la masse, résistance engendrée par les dépôts de suite, n'influence que très peu le mode de fonctionnement, et
à l'aide d'une unité d'exploitation (16) on saisit une composante de signal alternatif dans les signaux électriques de sortie, générée par les déplacements alternés des charges influencés par les particules (13) à charge électrique passant sur les électrodes (11, 12), ainsi qu'une temporisation τ des signaux de sortie par rapport à la masse pour la vitesse des particules dans les gaz d'échappement.

3. Procédé selon la revendication 2,
**caractérisé en ce qu'**
en plus on exploite les composantes alternatives des signaux de sortie électriques comme mesure de la concentration de particules et on détermine une mesure du débit de particules à partir du produit de la concentration des particules et de la vitesse des particules.

4. Procédé selon la revendication 1 ou 3,
**caractérisé en ce qu'**
on exploite les composantes alternatives de signal en déterminant leur variance pour déterminer la concentration de particules.

5. Procédé selon la revendication 4,
**caractérisé en ce qu'**
on détermine la variance en élevant les signaux au carré puis en les filtrant par un filtre passe-bas.

6. Procédé selon l'une des revendications 2 et 3,
**caractérisé en ce qu'**
on détermine la fréquence moyenne d'une composante périodique et on exploite cette fréquence moyenne comme mesure de la vitesse d'écoulement des particules à charge électrique, l'exploitation se faisant par l'analyse spectrale des signaux.

7. Procédé selon l'une des revendications 2 et 4,
**caractérisé en ce que**
le calcul de la temporisation τ est fait par l'exploitation d'une fonction de corrélation croisée.

8. Installation pour la mise en oeuvre d'un procédé selon la revendication 1 avec au moins une conduite d'échappement (10) dans laquelle est installé un élément de capteur, fournissant un signal de sortie électrique dépendant de la composition des gaz d'échappement traversant la conduite d'échappement (10),
l'élément de capteur ayant une électrode de surfaces (11, 12), exposée aux gaz d'échappement dans la conduite des gaz d'échappement (10), cette électrode étant pratiquement parallèle à la direction de trajectoire des particules et à l'aide d'un amplificateur opérationnel (OP1, OP2) servant d'amplificateur de charge associé à l'une des électrodes (11, 12) on maintient la conduite d'échappement (10) au potentiel, pour que la résistance de fuite de l'électrode (11, 12) engendrée par le dépôt de suie, vis-à-vis de la masse, n'influence que très peu le fonctionnement, et l'installation comporte une unité d'exploitation pour saisir une composante de signal alternatif dans le signal électrique de sortie, causée par les déplacements alternés de charge, influencée par les particules à charge électrique (13) passant sur l'électrode (11, 12), comme mesure de la concentration de particules dans les gaz d'échappement.

9. Installation pour la mise en oeuvre d'un procédé selon la revendication 2 comportant une conduite de gaz d'échappement (10) et au moins deux éléments de capteur installés dans la conduite de gaz d'échappement (10), ces éléments de capteur fournissant des signaux de sortie dépendant de la composition des gaz d'échappement traversant la conduite d'échappement (10), au moins les deux éléments de capteur étant des électrodes (11, 12) de surfaces, exposées aux gaz d'échappement traversant la conduite de gaz d'échappement (10), en étant situées pratiquement parallèlement à la direction de la trajectoire des particules, qui y sont installées l'une derrière l'autre dans la direction d'écoulement et maintenues par chaque fois un amplificateur opérationnel (OP1, OP2) servant d'amplificateur de charge associé aux électrodes (11, 12) au potentiel de la conduite d'échappement (10) de façon que la résistance de fuite des électrodes (11, 12) par rapport à la masse, résistance occasionnée par le dépôt de suie, n'influence que très peu leur fonctionnement et l'installation comporte une unité d'exploitation (16) pour saisir une composante de signal alternatif dans les signaux de sortie électrique, engendrée par les déplacements alternés de charge influencés par les particules (13) à charge électrique passant sur les électrodes (11, 12) ainsi que pour saisir la temporisation τ des signaux de sortie par rapport à la masse pour la vitesse des particules dans les gaz d'échappement.

10. Installation selon la revendication 8 ou 9,
**caractérisée en ce que**
l'amplificateur opérationnel associé à chaque électrode (11, 12) est muni d'un condensateur de réaction.

11. Installation selon l'une des revendications 8 à 10,
**caractérisée en ce qu'**
au moins trois électrodes sont installées l'une derrière l'autre périodiquement dans la direction d'écoulement.

12. Application d'un procédé selon l'une des revendications 1 à 7 ou d'une installation selon l'une des revendications 8 à 11 pour déterminer la concentration de particules de noir de fumée contenues dans les gaz d'échappement d'un moteur diesel.
